# EUROPÄISCHE PATENTANMELDUNG

(11) **EP 0 697 430 A2**
(43) Veröffentlichungstag der Anmeldung: **21.02.1996**
(21) Anmeldenummer: 95108596.8
(22) Anmeldetag: 27.03.1991
(51) Int. Cl.: C08J 5/04, C08J 5/24

(54) **Faserverstärkter Werkstoff, Verfahren zu seiner Herstellung und seine Verwendung**

(30) Priorität: 03.04.1990 DE 4010694
(62) Teilanmeldung aus: 91104871.8
(71) Anmelder: HOECHST AKTIENGESELLSCHAFT, D-65929 Frankfurt am Main (DE); MSH MAIN-SPREE HYDRAULIK GmbH, D-65812 Bad Soden a. Ts. (DE)
(72) Erfinder: Lorenz, Georg Michael, D-61389 Schmitten (DE); Gebauer, Elke, D-86399 Bobingen (DE); Schuster, Ulrich, D-97688 Bad Kissingen (DE); Tschacher, Manfred, D-84547 Emmerting (DE); Schönrogge, Burghard, D-63486 Bruchköbel (DE)
(74) Vertreter: Ackermann, Joachim, Dr.

(57) **Zusammenfassung**

Beschrieben wird ein Faserverstärkter Werkstoff aus einem flächenförmigen Textilmaterial und einem Duroplastharz, der einen Faseranteil von 30 bis 70 Gew.-% hat, wobei das darin enthaltene Fasermaterial zu mindestens 30.% aus Synthesefasern besteht.

Das Duroplastharz ist vorzugsweise ein Phenolharz, welches bis zu 25 Gew.-% eines Fluorpolymeren enthält.

Das flächenförmige Textilmaterial besteht vorzugsweise zu 100 % aus Synthesefasern, insbesondere aus Polyacrylnitrilfasern.

Beschrieben werden auch ein Prepreg aus dem Textilmaterial und dem Duroplast sowie Verfahren zur Herstellung dieser Gegenstände und die Verwendung des Werkstoffs zur Herstellung von Konstruktionselementen insbesondere für Hydraulicsysteme durch Anwendung von mechanischen Formgebungsprozessen.

## Beschreibung

Die vorliegende Erfindung betrifft einen faserverstärkten Werkstoff aus einem flächenförmigen Textilmaterial, das zumindest teilweise aus Synthesefasern besteht und einem ein Fluorpolymer enthaltenden Duroplastharz, sowie ein Prepreg zur Herstellung dieses Werkstoffs und flächenförmige oder dreidimensionale Konstruktionselemente aus diesem Werkstoff.

Es ist bereits bekannt, Konstruktionselemente wie z. B. Führungs- und Dichtungsmanschetten und -ringe, die vorzugsweise in Hydrauliksystemen eingesetzt werden, aus mit Cellulosefasergeweben verstärkten Duroplastharzen (Hartgewebeband) herzustellen. Diese bekannten Konstruktionselemente weisen jedoch in der Praxis eine unzureichende Flexibilität auf; sie neigen häufig zum Delaminieren und verursachen bei verschiedenen Anwendungen zu hohe Reibungsverluste. Auch die Hitzestandfestigkeit dieser Konstruktionskomponenten läßt in der Praxis des öfteren zu wünschen übrig.

Große Probleme ergeben sich bei Führungsringen gerade in Hydrauliksystemen aufgrund des Zusammenwirkens hoher statischer und dynamischer Drücke, zeitweise hoher Kantenbelastungen und hohen Arbeitstemperaturen bei gleichzeitig ständiger abrasiver Beanspruchung durch die Gleitbewegungen der Hydraulikelemente in Gegenwart der quellend und lösend wirkenden Hydraulikflüssigkeit.

Führungselemente aus Thermoplasten, die an sich gute Gleiteigenschaften und eine gute Flexibilität haben und Querkräfte, wie sich z. B. bei hohen Kantenbelastungen auftreten können, besser aushalten als sprödere Materialien, versagen unter den oben geschilderten Arbeitsbedingungen in Hydrauliksystemen bereits nach kurzer Zeit. Sie zeigen bei tiefen Temperaturen, wie sie z. B. im Winterbetrieb von Hydrauliksystemen auftreten können, Versprödung, so daß sie auch durch Kantenbelastungen leicht zerstört werden, bei ansteigenden Temperaturen zeigen sie plastische Verformung.

Es ist auch bereits bekannt, Verbundwerkstoffe aus Metallpulvern und Polytetrafluorethylen zur Herstellung von Gleit- und Führungsringen einzusetzen, um die guten Gleiteigenschaften von Polytetrafluorethylen auszunutzen.

Diese Materialien zeigen jedoch unter den hohen Drucken moderner Hydrauliksysteme einen viel zu hohen Kaltfluß, so daß sie bereits bei Normaltemperatur, erst recht aber unter den üblichen Betriebstemperaturen dieser Systeme nicht brauchbar sind.

Aus der Britischen Patentschrift 974 629 ist ein Verfahren zur Herstellung von Lagern bekannt, bei dem ein Werkstoff eingesetzt wird, der aus einem durch Gewebestreifen verstärkten, hitzehärtenden Harz besteht. Zur Herabsetzung der Reibungsverluste beim Einsatz dieser bekannten Lagerelemente wird im Verlauf des Formgebungsprozesses Polytetrafluorethylenpulver in die Oberfläche des Werkstoffs eingepreßt.

Aus der Britischen Patentschrift 1 031 406 ist eine Zusammensetzung bekannt zur Herstellung von Schutzüberzügen mit geringem Reibungskoeffizient auf Substraten wie z. B. Holz oder Stahl. Diese Zusammensetzung besteht im wesentlichen aus einem härtbaren Harz, beispielsweise einem hitzehärtendem Phenolformaldehydharz, in dem niedermolekulare Fluorpolymere in fein zerteilter Form enthalten sind.

Ein ähnliches Mittel zur Herstellung von Schutzüberzügen mit niedrigem Reibungskoeffizient und ein Verfahren zu dessen Anwendung findet sich in der Deutschen Patentschrift 1 250 035.

Die vorliegende Erfindung betrifft nun einen faserverstärkten Werkstoff, aus dem Konstruktionselemente mit einem relativ niedrigen Reibungskoeffizienten und hoher Druck- und Abriebfestigkeit, erheblich verbesserter Flexibilität, Dehnbarkeit, Scher- und Delaminierungsfestigkeit und hoher Temperaturstabilität hergestellt werden können, die gleichzeitig inert sind gegenüber lösend und/oder quellend wirkenden Flüssigkeiten, wie z. B. Hydraulik- oder Schmierflüssigkeit, und die sich daher beispielsweise insbesondere zum Einsatz als Führungselemente in hochbeanspruchten Hydrauliksystemen oder zum Bau von Lagern, insbesondere von Gleitlagern eignen.

Der erfindungsgemaße faserverstärkte Werkstoff besteht aus einem flächenförmigen Textilmaterial und einem Duroplastharz und ist dadurch gekennzeichnet, daß er einen Faseranteil von 30 bis 70 Gew.-%, vorzugsweise von 40 bis 60 Gew.-%, insbesondere von 45 bis 55 Gew.-% hat, und daß das darin enthaltene Fasermaterial zu mindestens 30 %, vorzugsweise zu mindestens 50 %, insbesondere zu mindestens 80 % aus Synthesefasern besteht. Als Duroplastharze kommen im Prinzip alle bekannten vernetzbaren, d. h. härtbaren Harzsysteme in Frage, insbesondere z. B. Phenolharze, aber auch Melaminharze, Epoxidharze und Alkydharze. Vorzugsweise wird ein Duroplastharz eingesetzt, das bis zu 25 Gew.-%, vorzugsweise 5 bis 20 Gew.-%, insbesondere 5 bis 10 Gew.-% eines Fluorpolymeren enthält. Besonders bevorzugt ist ein erfindungsgemäßer faserverstärkter Werkstoff, dessen Fasermaterial zu 100 % aus Synthesefasern besteht.

Als flächenförmige Textilmaterialien, die in dem erfindungsgemäßen faserverstärkten Werkstoff enthalten sein können, kommen in Betracht Gewebe, Gewirke/Gestricke oder Vliese. Das Fasermaterial der flächenförmigen Textilmaterialien kann in glatter oder gekräuselter (texturierter) Form und in Form von Stapelfasern, Stapelfasergarnen oder Multifilamentgarnen vorliegen. Handelt es sich bei dem in dem erfindungsgemäßen Werkstoff enthaltenen flächenförmigen Textilmaterial um ein Vliesmaterial, so besteht das Fasermaterial in der Regel aus gekräuselten Stapelfasern. Die Stapellänge dieser Fasern liegt in der Regel zwischen 20 und 200 mm. Mit Rücksicht auf besondere Festigkeitsanforderungen ist es besonders vorteilhaft, mit Stapelfasern von ca. 60 bis 150 mm Länge zu arbeiten. Besonders vorteilhaft für den erfindungsgemäßen Einsatzzweck sind Vliesmaterialien aus Stapelfasern mit einer mittleren Stapellänge von 40 bis 120 mm. Die in den erfindungsgemäßen Werkstoffen eingesetzten Vliese können zweckmäßigerweise noch durch eine Wärmebehandlung, z. B. durch Kalandrieren, insbesondere mit Prägekalandern oder durch eine Binderverfestigung, beispielsweise durch einen hitzehärtenden Binder oder durch Binderfilamente mit relativ hohem Schmelzpunkt oder auch durch mechanische Mittel wie z. B. durch Nadeln vorverfestigt werden.

Gewebe und Gewirke/Gestricke können aus glatten oder vorzugsweise aus texturierten Multifilamentgarnen oder vorzugsweise aus sekundär gesponnenen Stapelfasergarnen bestehen. Unter texturiertem Garn soll jedes in an sich bekannter Weise strukturierte Garn verstanden werden, insbesondere auch Effektgarne wie z. B. Schlingengarne, die aufgrund von Fäserchen und Schlingen, die von der Fadenoberfläche abstehen oder durch bei der Herstellung eingebrachten Dickstellen oder "Bauchbinden" einen die Haftung mit dem Matrixharz verbessernden Effekt aufweisen. Die Flächengewichte der in dem erfindungsgemäßen Werkstoff enthaltenen flächenförmigen Textilmaterialien liegen zweckmäßigerweise im Bereich von 100 bis 280, vorzugsweise 120 bis 250, insbesondere im Bereich von 120 bis 150 g/gm.

Besonders bevorzugt sind solche erfindungsgemäßen Werkstoffe, deren textiles Flächengebilde aus einem Stapelfasergarn besteht, das aus 100 % synthetischen Fasern besteht. Die Stapelfasergarne ihrerseits können vorliegen als Einfachgarne, als Zwirne und sie können sonstige bekannte Spinn- oder Zwirneffekte aufweisen.

Das in den erfindungsgemäßen Werkstoffen enthaltene Fasermaterial ist zumindest zu 30 % synthetisch. Als Naturfasern, die in den erfindungsgemäßen Werkstoffen enthalten sein können, kommen insbesondere Cellulosefasern wie z. B. Baumwolle- oder Jutefasern in Betracht. Als Synthesefasern, aus denen die in den erfindungsgemäßen Werkstoffen enthaltenen flächenförmigen Textilmaterialien überwiegend, oder vorzugsweise ausschließlich, aufgebaut sind, kommen im Prinzip alle bekannten hochfesten, hochmoduligen, ausreichend temperaturbeständigen Synthesefasern wie z. B. teil- oder vollaromatische Polyamidfasern, teil- oder vollaromatische Polyesterfasern, hochfeste Polyacrylnitrilfasern in oxidierter oder nicht-oxidierter Form oder auch Kohlenstoffasern in Betracht. In bezug auf das Preis/Leistungs-Verhältnis und im Hinblick auf die Haftung zwischen Fasermaterial und dem Duroplastharz ist der Einsatz von Phenolharzen als Duroplast und die Verwendung von textilen Flächengebilden aus Polyesterfasern, insbesondere aus Polyethylenterephthalat, von Flächengebilden aus Mischfasergarnen aus Polyester/Cellulose, insbesondere und bevorzugt aber von textilen Flächengebilden aus Polyacrylnitrilfasern besonders vorteilhaft. Besonders bevorzugt ist der Einsatz der hochfesten Typen dieser Synthesefasern. Wie oben bereits ausgeführt, können die Synthesefasern in gekräuselter oder nicht-gekräuselter Form und als Endlos- oder Stapelfaser vorliegen, je nach Art des textilen Flächengebildes. Die Titer der Synthesefasern liegen zweckmäßigerweise bei 1 bis 9 dtex, wobei für Polyacrylnitrilfasertypen 1,7 bis 6,7 dtex bevorzugt sind, insbesondere 2 bis 3 dtex.

Für andere hochtemperaturbeständige Fasern sind in etwa gleiche Titerbereiche einzusetzen, welche für den Einzelfall durch entsprechende Vorversuche ermittelt werden können. Die Festigkeit der zweckmäßigerweise eingesetzten hochfesten Fasertypen liegt bei Polyethylenterephthalat im Bereich von 65 bis 75 cN/tex, bei hochfesten Polyacrylnitriltypen bei über 55 cN/tex, für Einzelfasertiter zwischen 2 und 3 dtex und bei über 43 cN/tex für Einzelfasertiter im Bereich oberhalb 5 dtex. Die Höchstzugkraftdehnung der zweckmäßigerweise eingesetzen Synthesefasern liegt für Polyethylenterephthalat im Bereich von 14 bis 17 %, für die besonders bevorzugten Polyacrylnitrilfasertypen im Bereich von 13 bis 16 %, bei Einzelfasertitern zwischen 2 und 3 dtex und bei etwa 14 bis 17 % bei Einzelfasertitern über 5 dtex.

Besonders bevorzugte erfindungsgemäße Werkstoffe enthalten flächenförmige Textilmaterialien, insbesondere Gewebe oder Vliese aus hochverstreckten, nicht oxidierten Polyacrylnitrilfasern, die beispielsweise unter der Bezeichnung ®Dolanit in den Typen 12 und 15 im Handel sind. Hierbei handelt es sich um gekräuselte Langfasertypen (Schnittlänge ca. 60-100 mm), die durch eine gute Haftung innerhalb des Garnverbundes charakterisiert sind und sich daher gut zu Garnen/Geweben und Vliesen verarbeiten lassen. Derartige hochfeste Fasern zeichnen sich gegenüber textilen Polyacrylnitrilfasern durch eine nahezu doppelt so hohe Faser-Festigkeit, sowie durch ihre gute Chemikalien- und Temperaturbeständigkeit aus. Eine besonders bevorzugte Ausführungsform des erfindungsgemäßen Werkstoffs enthält beispielsweise ein Gewirke/Gestrick oder insbesondere ein Gewebe aus einem gekräuselten, gezwirnten Stapelfasergarn aus der hochfesten Polyacrylnitrilfasertype ®Dolanit 15 oder aber ein Vlies aus gekräuselten Stapelfasern aus der hochfesten Polyacrylnitrilfasertype ®Dolanit 12.

Wie bereits oben ausgeführt, werden als Duroplastharze vorzugsweise Phenolharze eingesetzt.

Als Phenolharz sind in den erfindungsgemäßen faserverstärkten Werkstoffen bekannte Kondensationsprodukte von Phenol und Phenolderivaten mit Formaldehyd enthalten. Als Phenolderivate kommen insbesondere in Betracht substituierte Phenole, insbesondere alkylsubstituierte Phenole wie z. B. Kresole, Xylenole und andere Alkylphenole wie z.B. p-tert.-Butylphenol, Octylphenol und Nonylphenol aber auch Arylphenole, wie z.B. Phenylphenol,Naphthole, und 2-wertige Phenole wie z.B. Resorcin und Bisphenol A. Als Phenolharze im Sinne dieser Erfindung sind sowohl die Kondensationsprodukte der genannten Einzelverbindungen als auch Kondensationsprodukte von Mischungen der obengenannten Phenole und Phenolderivate mit Formaldehyd zu verstehen. Sollen Einzelverbindungen zur Herstellung der Phenolharze eingesetzt werden, so ist zu beachten, daß diese eine mindestens dreifache Funktionalität gegenüber Formaldehyd haben müssen. Die genannten Phenolharze können auch in an sich bekannter Weise zur Optimierung besonderer Eigenschaften durch Zusätze ungesättigter natürlicher oder synthetischer Verbindungen wie z. B. Holzöl, Kolophonium oder Styrol modifiziert sein. Besonders bevorzugt sind Kondensationsprodukte von Formaldehyd mit Phenol selbst und Mischungen von Phenol mit geringeren Anteilen der genannten Phenolderivate, insbesondere der genannten alkylsubstituierten Phenole.

Die in den erfindungsgemäßen Werkstoffen enthaltene Phenolharze weisen ein Molverhältnis von Phenol zu Formaldehyd von 1 : 1 bis 1 : 3, vorzugsweise von 1 : 1,2 bis 1 : 2,2 auf. Geeignete Phenolharze sind beispielsweise unter der Typenbezeichnung Phenodur VPR 45 im Handel.

Vorzugsweise enthält das in den erfindungsgemäßen Werkstoffen enthaltene Duroplastharz, insbesondere das Phenolharz, wie oben bereits angegeben, bis zu 25 % eines Fluorpolymeren in fein verteilter Form. Geeignete Fluorpolymere sind insbesondere Polytetrafluorethylen-Typen mit nicht zu hohem Molekulargewicht von ca. 20.000 bis 500.000. Vorzugsweise liegt das Molekulargewicht im Bereich von 50.000 bis 200.000. Für die vorliegende Erfindung eignen sich insbesondere solche Fluorpolymere, deren spezifische Oberfläche zwischen 5 - 15 m²/g, bei einer Dichte von ca. 2,1 - 2,3 g/cm³, liegt. Geeignete Polymerisate zeigen einen Erweichungspunkt von ca. 200 bis 250°C und Schmelzpunkte von ca. 325 - 330°C und eine Schmelzviskosität, gemessen bei 380°C, von ca. 10² bis 10⁵ Pa·s (berechnet nach Hagen-Poisseuille). Von besonderer Bedeutung ist die mittlere Teilchengröße des Fluorpolymeren, die zweckmäßigerweise im Bereich von 0,5 bis 10 µm, vorzugsweise im Bereich von 2 bis 7 µm gewählt wird. Die Teilchengröße wird zweckmäßigerweise z. B. in einem Particle Size Analyzer der Fa. Hitachi in einer Netzmittellösung gemessen. Die Partikel des Fluorpolymeren, vorzugsweise des Polytetrafluorethylens sollen möglichst porenfrei sein, damit das Material nicht zum Aufschwimmen in der Phenolharzmasse tendiert.

Geeignete Fluorpolymertypen sind z. B. unter der Bezeichnung ®Hostaflon Mikropulver der Typen TF 9205 und insbesondere TF 9202 im Handel.

Das in dem erfindungsgemäßen faserverstärkten Werkstoff enthaltene Phenolharz enthält vorzugsweise zusätzlich zu dem Fluorpolymeren noch ein oder mehrere Substanzen, die als Weichmacher oder Haftungsverbesserer dienen, d. h. die den Elastizitätsbereich des Harzes erweitern und seine Bindung mit den inkorporierten Fasermaterialien verbessern. Derartige Mittel sind in dem Phenolharz zweckmäßigerweise in einer Menge von 1 bis 15 Gew.-%, vorzugsweise 3 bis 10 Gew.-%, insbesondere 4 bis 7 Gew.-% enthalten. Als besonders geeignete Weichmacher und Haftungsverbesserer haben sich Mischkondensationsprodukte aus der Klasse der Polyamide sowie Derivate des Polyvinylalkohols wie Polyvinylacetat, vorzugsweise aber Polyvinylbutyral erwiesen. Aus Verträglichkeitsgründen sind niedrig acetalisierte Typen besonders bevorzugt. Bevorzugte Phenylbutyraltypen sind in niederen aliphatischen Alkoholen löslich, weisen einen Acetalisierungsgrad von 60 bis 75 %, vorzugsweise von 68 bis 72 % auf und eine 6 %ige methanolische Lösung des bevorzugten Polyvinylbutyrals hat bei 20°C eine Viskosität von 2 bis 20, vorzugsweise 4 bis 6 mPa·s.

Das in den erfindungsgemäßen Werkstoffen enthaltene Phenolharz kann über die angegebenen Zusätze hinaus noch weitere in Phenolharzen übliche Zusätze wie beispielsweise Entschäumer, Netzmittel, Verlaufmittel oder auch weitere Plastifizierungsmittel sowie latente Härter enthalten. Diese Zusätze können, sofern sie gewünscht werden, in einem Anteil von bis zu 2 Gew.-%, vorzugsweise im Bereich von 0,1 bis 1 Gew.-% im Harz enthalten sein.

Je nach der gewünschten Stärke der Konstruktionselemente, die aus den erfindungsgemäßen faserverstärkten Werkstoffen hergestellt werden sollen, weist der Werkstoff eine entsprechende Anzahl Lagen des flächenförmigen Textilmaterials auf.

Das in den erfindungsgemäßen faserverstärkten Werkstoffen enthaltene Phenolharz liegt im ausgehärteten, d. h. vernetzten Zustand vor. Gegenstand der vorliegenden Anmeldung sind jedoch auch Prepregs, die zur Herstellung des erfindungsgemäßen faserverstärkten Werkstoffs dienen. Diese Prepregs unterscheiden sich von den oben beschriebenen erfindungsgemäßen Werkstoffen dadurch, daß das Phenolharz in ihnen im ungehärteten Zustand vorliegt und dadurch die Verformbarkeit des Prepregs unter Wärme und Druck gewährleistet ist und dadurch, daß sie in der Regel nur eine Schicht des flächenförmigen Textilmaterials aufweisen. Der Kondensationsgrad des Phenolharzes wird durch einen Trocknungsprozess so weit erhöht, daß das Prepreg klebfrei und somit gut aufrollbar ist und das Fließ- und Härtungsverhalten des Harzes auf die Herstellungsbedingungen des Werkstoffs abgestimmt ist. Der erfindungsgemäße faserverstärkte Werkstoff kann in verschiedenen geometrischen Formen, insbesondere in Form von flächenförmigen oder dreidimensional geformten, z. B. rohrförmigen Halbfertigerzeugnissen oder auch in Form flächenförmiger oder dreidimensionaler fertiger Konstruktionselemente vorliegen.

Besonders bevorzugt sind insbesondere solche Ausführungsformen des erfindungsgemäßen Werkstoffs, der eine Kombination mehrerer der obengenannten bevorzugten Merkmale aufweisen.

Die Herstellung der erfindungsgemäßen flächenförmigen oder dreidimensionalen faserverstärkten Werkstoffe erfolgt in an sich bekannter Weise dadurch, daß eine Bahn des oben beschriebenen flächenförmigen Textilmaterials in einer geeigneten Weise, beispielsweise durch Tränken, Pflatschen, Bürsten oder Rakeln mit einer Lösung eines oben. beschriebenen Duroplastharzes, welches, bezogen auf den Feststoff der Imprägnierflotte, bis zu 25 Gew.-%, vorzugsweise 5 bis 20 Gew.-%, insbesondere 5 bis 10 Gew.-% eines fein verteilten, oben beschriebenen Fluorpolymeren, 1 bis 15 Gew.-%, vorzugsweise 3 bis 10 Gew.-%, insbesondere 4 bis 7 Gew.-% eines oder mehrerer Weichmacher und Haftverbesserer und gegebenenfalls bis zu 2 Gew.-%, vorzugsweise 0,1 bis 1 Gew.-% weiterer in Duroplasten üblichen Modifizierungsmittel enthält, so imprägniert wird, daß das imprägnierte Material einen Faseranteil, gerechnet fest auf fest, von 40 bis 60 Gew.-%, vorzugsweise von 45 bis 55 Gew.-% aus Fasermaterial enthält. Das so erhaltene Imprägnat wird, nach einem Trocknungsprozess bis zur Klebfreiheit, bei dem der überwiegende Teil des Lösungsmittels und gegebenenfalls Wasser entzogen wird und bei dem das Harz, zur Einstellung des Fließ- und Härtungsverhaltens, einer Weiterkondensation unterworfen wird, zu mehreren Lagen gestapelt und durch Anwendung von Druck und Wärme in die gewünschte flächenförmige oder dreidimensionale Form gebracht. Zur Herstellung flächenförmiger Werkstoffe wird das trockene Prepreg in passende Abschnitte geschnitten, die übereinandergestapelt unter Druck einer Wärmebehandlung unterworfen werden, wobei die Lagen durch das Fließen des Harzes miteinander verschmelzen. Dreidimensionale Gebilde aus den erfindungsgemäßen Werkstoffen wie z. B. rohrförmige Gebilde können dadurch erhalten werden, daß das trockene, gegebenenfalls durch Erwärmen plastifizierte Prepreg auf einen Wickeldorn in der gewünschten Anzahl von Windungen aufgewickelt wird und der erhaltene Wickel auf dem Dorn einer Wärmebehandlung ohne zusätzlichen Preßdruck oder unter Druck unterworfen wird.

Aus den so hergestellten flächenförmigen oder dreidimensionalen Halbfertigwaren aus dem erfindungsgemäßen faserverstärkten Werkstoff können anschließend durch mechanische Bearbeitungsverfahren die gewünschten Konstruktionselemente, wie beispielsweise Führungs- und Dichtungsmanschetten, Dichtungen oder auch Gleitlagerbuchsen, Lagerschalen und -käfige hergestellt werden. Die aus den erfindungsgemäßen Werkstoffen hergestellten flächenförmigen oder dreidimensionalen Halbfertigerzeugnissen und die aus diesen hergestellten Konstruktionselemente sind ebenfalls Gegenstand der vorliegenden Patentanmeldung.

Die aus den erfindungsgemäßen faserverstärkten Werkstoffen hergestellten Endprodukte zeichnen sich durch eine besonders hohe Flexibilität und hohes Rückstellvermögen, durch geringe Neigung zum Delaminieren und durch hohe Beständigkeit gegenüber hohen Temperaturen und lösend und/oder quellend wirkenden Flüssigkeiten aus. Ferner weisen die erfindungsgemäßen Konstruktionselemente eine sehr hohe mechanische Festigkeit bei sehr günstigem Verschleißverhalten und hoher Verschleißfestigkeit, ausgezeichnete Gleiteigenschaften, niedrigen Reibungskoeffizient und sehr vorteilhafte Selbstschmierungseigenschaften auf.

Hervorzuheben ist ferner ihre sehr gute Bearbeitbarkeit, wodurch mit spanabhebenden Formgebungsverfahren außerordentlich glatte Oberflächen erhalten werden, die in der Regel keiner glättenden Nachbehandlung bedürfen und die außerordentlich homogen und geschlossen sind.

In der praktischen Anwendung ergeben sich aus diesen Materialeigenschaften leichte Montage und Demontage, verringerte Reibungs- und Losreißkräfte, verbesserte Aufnahme von Radialbelastungen, verringerter Abrieb, keine Kontaktkorrosion, verbesserte Notlaufeigenschaften, Dimensions- und Formstabilität, kein Ausweichen unter hohen Belastungen durch Kriechen oder Kaltfluß, hohe Alterungsbeständigkeit auch bei hohen Temperaturen und in Gegenwart aggressiver Medien und geringe Feuchtigkeitsaufnahme.

Die erfindungsgemäßen Konstruktionselemente sind damit bisher bekannten Produkten qualitativ erheblich überlegen.

Das folgende Ausführungsbeispiel veranschaulicht die Herstellung eines erfindungsgemäßen faserverstärkten Werkstoffs in Röhrenform und die Verarbeitung dieses Produkts zu verschiedenen dreidimensionalen Konstruktionselementen.

### Beispiel

Die Tränkwanne einer Imprägnieranlage wird mit einer Harzmischung aus 100 kg Phenolharz (®Phenodur VPR 45 der Firma Hoechst AG), 27,7 kg Polyvinylbutyral (®Movital 30 TA der Firma Hoechst AG), 7,4 kg pulverförmiges Tetrafluorethylen (®Hostaflon Mikropulver TF 9202 der Firma Hoechst AG), 0,2 kg eines Entschäumers und 7,9 kg organisches Lösungsmittel auf der Basis eines teilveretherten niedermolekularen Alkandiols befüllt. Das Phenolharz wurde als 65 %ige methanolische Lösung Polyvinylbutyral als 15 %ige Lösung in Ethanol eingesetzt.

Mit dieser Harzmasse wurde ein Gewebe aus einem gezwirnten hochfesten Polyacrylnitrilstapelfasergarn (®Dolanit 15 der Firma Hoechst AG) mit einem Flächengewicht von ca. 225 g/gm auf einer Imprägnieranlage mit einer Imprägniergeschwindigkeit von 5 m/min getränkt und anschließend bei einer Temperatur zwischen 130 und 150°C getrocknet. Das erhaltene Prepreg wies folgende Eigenschaften auf:
- Harzgehalt:: ca. 46 %
- Harzfluß :: 14 - 17 %
Zur Bestimmung des Harzflusses werden 4 Lagen Prepreg mit der Abmessung 10 x 10 cm 10 Minuten bei 150°C und einem spezifischen Preßdruck von 5 - 6 bar verpreßt. Der ausgepreßte Harzanteil wurde quantitativ erfaßt und gibt in Prozent des Ausgangsgewichts den sog. Harzfluß an.
- flüchtige Anteile :: ca. 8 %
Die flüchtigen Anteile stellen den Gewichtsverlust eines 10 Minuten bei 160°C gehärteten Prepregs in Prozent dar.

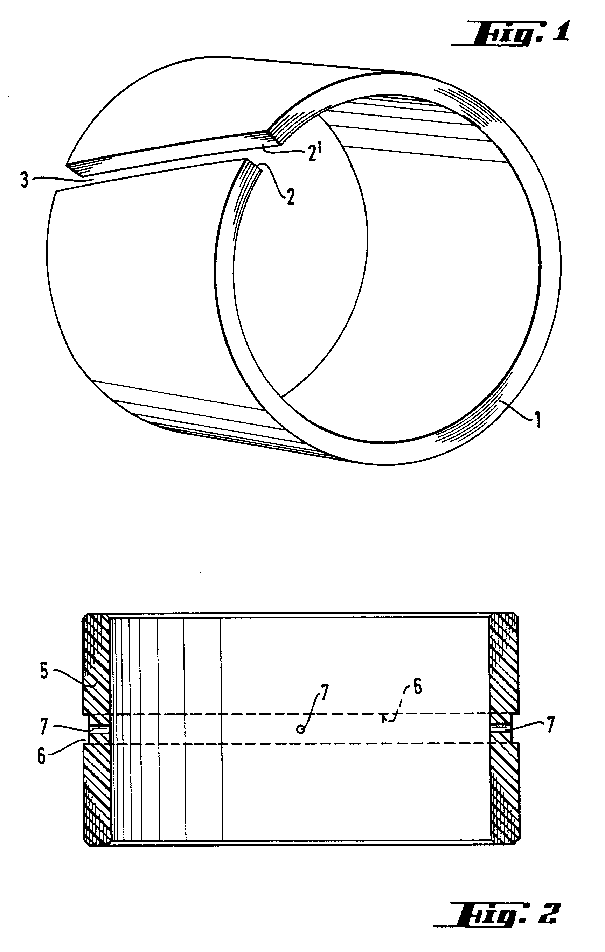

Dieses Prepreg wurde auf einen vorgewärmten Stahlkern mit zwei beheizten Gegenwalzen in 15 Lagen aufgewickelt. Die Bewicklung auf dem Kern wird in einem Trockenofen 4 bis 8 Stunden lang bei 150 bis 160°C ausgehärtet. Anschließend wird das erhaltene erfindungsgemäße Werkstoffrohr auf einer Drehbank unter Zufuhr von Kühlflüssigkeit auf die für einen Führungsring für Hydraulikzylinder erforderliche Wandstärke abgedreht und in Längen geschnitten. Jeder der so hergestellten Werkstoffringe wird anschließend etwa achsenparallel so aufgeschnitten, daß sich zwischen den entstehenden Schnittkanten ein Spalt von ca. 3 mm ergibt. Die Fig. 1 veranschaulicht den so hergestellten Führungsring (1) mit dem von den Schnittenden (2,2') gebildeten Spalt (3).

Dieser aus dem erfindungsgemäßen Werkstoff hergestellte Führungsring hat im Vergleich zu einem mit gleichen Werkzeugen und unter gleichen Bedingungen aus herkömmlichen Materialien (baumwollverstärktes Phenolharz) hergestellten Führungsring eine ungewöhnlich hohe Oberflächengüte, so daß sich jede weitere glättende Nachbearbeitung der Oberfläche erübrigt. Die für die Oberfläche aus herkömmlichen Verbundwerkstoffen gedrehten Rohlinge charakteristischen, von den Schneidwerkzeugen aus der Materialoberfläche herausgerissenen kleinen Faserenden fehlen hier völlig. Darüber hinaus erweist sich die Oberfläche des Ringes als überraschend homogen. Harzmatrix und Fasermaterial erscheinen weitgehend verschmolzen.

Die Oberfläche ist auch außerordentlich dicht und nimmt sehr wenig Feuchtigkeit auf, so daß die naß gedrehten Körper kaum einer Nachtrocknung bedürfen.

Der erfindungsgemäße Führungsring hat eine sehr gute Flexibilität und ein hohes Rückstellvermögen. Er läßt sich auf einen kleineren Durchmesser zusammendrücken, wobei sich die Schnittenden (2,2') übereinanderschieben, und federt beim Loslassen in seine ursprüngliche Form zurück. Er kann daher besonders leicht montiert werden, indem er in zusammengedrücktem Zustand in einen Hydraulikzylinder eingeschoben wird, bis er die Innennut des Zylinders erreicht und dort "einschnappt".

Auch im Dauergebrauchstest zeigt der erfindungsgemäße Ring gegenüber einem Ring aus herkömmlichem Hartgewebeband eine frappante Überlegenheit. Hierzu werden zwei gleiche Exemplare einer Testhydraulik mit hochglanzverchromten Kolbenstangen mit den zu vergleichenden Führungsringen ausgerüstet und unter Last arbeiten gelassen.

Nach etwa 50.000 Doppelhüben erschien die zunächst weiß glänzende Kolbenstange der mit dem herkömmlichen Hartgewebeband ausgerüsteten Testhydraulik dunkel getönt, die Schmierung nahm wegen der stark ansteigenden Porenfreiheit des Kolbenstangen-Materials drastisch ab, und der Versuch mußte beendet werden wegen zu starker Ölleckage. Die Kolbenstange der mit dem erfindungsgemäßen Führungsring ausgerüsteten Testhydraulik war nach dieser Doppelhub-Zahl noch immer weiß und zeigte lediglich einen feinen farblosen Schleier. Auch nach 200.000 Doppelhüben zeigt die mit dem erfindungsgemäßen Ring ausgerüstete Hydraulik noch eine einwandfreie Funktion ohne Anzeichen einer übermäßigen, schädlichen Politur der Kolbenstange.

In analoger Weise können auch ungeschlitzte Führungsringe hergestellt werden für die Montage auf Hydraulikkolben mit Einbaunut. Hier zeigt sich die hohe Dehnbarkeit des erfindungsgemäßen Werkstoffs als ein erheblicher Vorteil. Der zu montierende Ring kann vom Durchmesser des Nutgrundes leicht auf den Durchmesser der Stange gedehnt und auf die Stange bis zur Nut aufgeschoben werden, wo er einwandfrei "einschnappt", ohne kalibriert zu werden.

Als weiteres Beispiel sei hier die in Figur 2 gezeigte Gleitlagerhülse (5) mit einer umlaufenden Schmiernut (6) und Bohrungen (7) genannt, die in Analogie zu der oben beschriebenen Herstellung der Führungsringe produziert werden kann. Diese Gleitlagerhülse hat eine sehr hohe Lebensdauer, reduziert die Maschinen-Stillstandszeiten auf ein Minimum, spart Energie und Kosten und verringert den von dem Lager produzierten Geräuschpegel.

## Patentansprüche

1. Flächenförmige (Seite 11, Zeile 10) oder dreidimensionale Gebilde (Seite 11, Zeile 14) aus einem faserverstärkten Werkstoff (Ansprüche 1 + 24; Beschreibung Seite 11, Zeilen 30 - 34) aus einem flächenförmigen Textilmaterial und einem Duroplastharz, dadurch gekennzeichnet, daß sie mehrere übereinanderliegende Lagen des flächenförmigen Textilmaterials (Seite 11, Zeilen 7 und 18) aufweisen, einen Faseranteil von 30 bis 70 Gew.-% haben (Anspruch 1 + 14), daß das darin enthaltene Fasermaterial zu mindestens 30 Gew.-% (Ansprüche 1 + 19) aus teil- oder vollaromatischen Polyamidfasern, teil- oder vollaromatischen Polyesterfasern oder Polyacrylnitrilfasern (Seite 5, Zeilen 18/19, Zeilen 25/26 und Zeile 29) besteht und daß das Duroplastharz einen Zusatz von Fluorpolymeren in einer Menge von bis zu 25 Gew.-% (Seite 3, Zeilen 26-29) enthält.

2. Flächenförmige oder dreidimensionale Gebilde gemaß Anspruch 1, dadurch gekennzeichnet, daß das Duroplastharz ein Phenolharz ist.

3. Flächenförmige oder dreidimensionale Gebilde gemäß mindestens einem der Ansprüche 1 und 2, dadurch gekennzeichnet, daß das darin enthaltene flächenförmige Textilmaterial zu 100 % aus teil- oder vollaromatischen Polyamidfasern, teil- oder vollaromatischen Polyesterfasern oder Polyacrylnitrilfasern besteht.

4. Flächenförmige oder dreidimensionale Gebilde gemäß mindestens einem der Ansprüche 1 bis 3, dadurch gekennzeichnet, daß das darin enthaltene flächenförmige Textilmaterial ein Gewebe, ein Gewirke/Gestrick oder ein Vlies ist.

5. Flächenförmige oder dreidimensionale Gebilde gemäß mindestens einem der Ansprüche 1 bis 4, dadurch gekennzeichnet, daß das darin enthaltene flächenförmige Textilmaterial aus einem Stapelfasergarn besteht.

6. Flächenförmige oder dreidimensionale Gebilde gemaß mindestens einem der Ansprüche 1 bis 5, dadurch gekennzeichnet, daß das darin enthaltene flächenförmige Textilmaterial aus Polyacrylnitrilfasern besteht.

7. Flächenförmige oder dreidimensionale Gebilde gemäß mindestens einem der Ansprüche 1 bis 6, dadurch gekennzeichnet, daß das darin enthaltene flächenförmige Textilmaterial aus hochfesten Polyacrylnitrilfasern besteht.

8. Flächenförmige oder dreidimensionale Gebilde gemäß mindestens einem der Ansprüche 1 bis 7, dadurch gekennzeichnet, daß das darin enthaltene Phenolharz ein Phenolformaldehydkondensat ist mit einem Molverhältnis von Phenol:Formaldehyd von 1:1 bis 1:3.

9. Flächenförmige oder dreidimensionale Gebilde gemäß mindestens einem der Ansprüche 1 bis 8, dadurch gekennzeichnet, daß das im Phenolharz enthaltene Fluorpolymer eine Schmelzviskosität, gemessen bei 380°C von ca. 10² bis 10⁵ Pa·s und eine mittlere Teilchengröße von 0,5 bis 10 µm hat.

10. Flächenförmige oder dreidimensionale Gebilde gemäß mindestens einem der Ansprüche 1 bis 9, dadurch gekennzeichnet, daß das Phenolharz zusätzlich Substanzen enthält, die als Weichmacher und Haftungsverbesserer wirken.

11. Flächenförmige oder dreidimensionale Gebilde gemäß mindestens einem der Ansprüche 1 bis 10, dadurch gekennzeichnet, daß die als Weichmacher oder Haftungsverbesserer wirkende Substanz ein Polyvinylalkoholderivat ist.

12. Flächenförmige oder dreidimensionale Gebilde gemäß mindestens einem der Ansprüche 1 bis 11, dadurch gekennzeichnet, daß die als Weichmacher oder Haftungsverbesserer wirkende Substanz Polyvinylbutyral ist.

13. Verfahren zur Herstellung der flächenförmigen oder dreidimensionalen Gebilde des Anspruchs 1, bei dem ein Imprägnat aus einem flächenförmigen Textilmaterial und einem Duroplastharz zu mehreren Lagen gestapelt und durch Anwendung von Druck und Wärme in die gewünschte flache oder dreidimensionale Form gebracht wird (Seite 11, Zeilen 2 bis 9), dadurch gekennzeichnet, daß ein Imprägnat (Präpreg) eingesetzt wird, das einen Faseranteil von 30 bis 70 Gew.-% (Ansprüche 1 + 19) hat, daß das darin enthaltene Fasermaterial zu mindestens 30 Gew.-% (Ansprüche 1 + 19) aus teil- oder vollaromatischen Polyamidfasern, teil- oder vollaromatischen Polyesterfasern oder Polyacrylnitrilfasern (Seite 5, Zeilen 18/19, Zeilen 25/26 und Zeile 29) besteht und daß das eingesetzte Duroplastharz einen Zusatz von Fluorpolymeren in einer Menge von bis zu 25 Gew.-% (Seite 3, Zeilen 26-29) enthält.

14. Flächenförmige oder dreidimensionale Konstruktionselemente (Seite 11, Zeilen 5 bis 1 von unten), hergestellt durch mechanische Bearbeitungsverfahren aus flächenförmigen oder dreidimensionalen Gebilden des Anspruchs 1.

15. Flächenförmige oder dreidimensionale (Seite 11, Zeile 12 von unten) Führungselemente (Seite 3, Zeile 11), Dichtungsmanschetten und Dichtungen sowie Gleitlager, Gleitlagerbuchsen, Lagerschalen und Lagerkäfige (Seite 11, Zeilen 8 bis 6 von unten), hergestellt durch mechanische Bearbeitungsverfahren aus flächenförmigen oder dreidimensionalen Gebilden des Anspruchs 1.

16. Verwendung der aus flächenförmigen (Seite 11, Zeile 10) oder dreidimensionalen Gebilden des Anspruchs 1 hergestellten Führungselemente (Seite 3, Zeile 11), Dichtungsmanschetten und Dichtungen in Hydrauliksystemen (Seite 3, Zeile 11, Seite 14, Zeilen 7/8, Seite 15, Zeilen 2-6 und Zeilen 29-31).
